(19) Europäisches Patentamt
European Patent Office
Office européen des brevets

(11) **EP 2 998 920 A1**

(12) **EUROPEAN PATENT APPLICATION**

(43) Date of publication:
**23.03.2016 Bulletin 2016/12**

(51) Int Cl.:
***G06Q 30/02*** *(2012.01)*

(21) Application number: **15184353.9**

(22) Date of filing: **08.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **16.09.2014 JP 2014188229**

(71) Applicant: **Kabushiki Kaisha Toshiba**
**Tokyo 105-8001 (JP)**

(72) Inventors:
• **ORIHARA, Ryohei**
**Tokyo, 105-8001 (JP)**
• **SHIMOGORI, Nobuhiro**
**Tokyo, 105-8001 (JP)**
• **IKEDA, Tomoo**
**Tokyo, 105-8001 (JP)**
• **NAKATA, Kouta**
**Tokyo, 105-8001 (JP)**

(74) Representative: **Moreland, David et al**
**Marks & Clerk LLP**
**Aurora**
**120 Bothwell Street**
**Glasgow G2 7JS (GB)**

(54) **PROGRAM EXTRACTION APPARATUS AND METHOD**

(57)     According to one embodiment, a program extraction apparatus includes an acquirer (101), a setting unit (102), a first calculator (103) and an extractor (104). The acquirer (101) acquires a viewing history including information on at least one program viewed by each of users, and an area code indicating a location of the each of users. The setting unit (102) sets a range of a target area by using the area code. The first calculator (103) calculates, for each program included in the viewing history of at least one user belonging to the target area, a viewing amount indicating how much the program was viewed to obtain a local area viewing amount. The extractor (104) extracts at least one program by referring to the local area viewing amount.

FIG. 1

## Description

### FIELD

Embodiments described herein relate generally to a program extraction apparatus and method.

### BACKGROUND

If a product or a place is introduced on a TV program, the product or place becomes popular, and the sales of the product or people who visit the place tend to increase. Retailers have been trying to take advantage of this tendency for sales promotion. Specifically, retailers check a product or place introduced on a TV program that recorded a high viewer rating. If a product related to the introduced product or place has been sold in a store where a sales promotion is undertaken, retailers increase the amount purchased of the related product, or locate the related product in a more visible location.

### BRIEF DESCRIPTION OF THE DRAWINGS

FIG. 1 is a block diagram showing a program extraction apparatus according to the first embodiment.
FIG. 2 illustrates an example of a user's viewing history.
FIG. 3 illustrates an example of a user's area code.
FIG. 4 is a flowchart indicating a viewing amount computation process.
FIG. 5 illustrates an example of viewing amount.
FIG. 6 illustrates a first example of extraction results of a high viewer rating program extractor.
FIG. 7 illustrates a second example of extraction results.
FIG. 8 is a block diagram showing a program extraction apparatus according to the second embodiment.
FIG. 9 illustrates an example of extraction results of the characterized program extractor.

### DETAILED DESCRIPTION

Data based on viewing behavior of users surveyed nation-wide that is provided by a viewer rating company is normally used as viewer rating data. The data provided by the rating company is usually collected from an extremely small population for each area. If the viewer rating for each area is taken into consideration, it is unlikely to accurately reflect the user's viewing behavior of a particular catchment area. Accordingly, there is a risk where a program that is not actually widely viewed in a particular catchment area is emphasized, but a program that was widely viewed in a particular catchment area is overlooked.

In general, according to one embodiment, a program extraction apparatus includes an acquirer, a setting unit, a first calculator and an extractor. The acquirer acquires a viewing history including information on at least one program viewed by each of users, and an area code indicating a location of the each of users. The setting unit sets a range of a target area by using the area code. The first calculator calculates, for each program included in the viewing history of at least one user belonging to the target area, a viewing amount indicating how much the program was viewed to obtain a local area viewing amount. The extractor extracts at least one program by referring to the local area viewing amount.

In the following, the program extraction apparatus, method, and program according to the present embodiment will be described in detail with reference to the drawings. In the following embodiments, elements which perform the same operation will be assigned the same reference symbol, and redundant explanations thereof will be omitted as appropriate.

(First Embodiment)

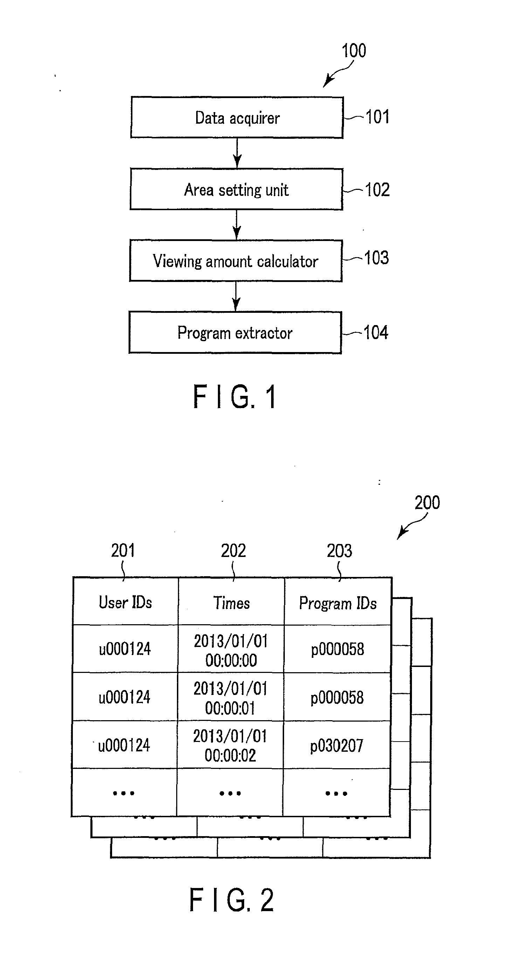

The program extraction apparatus according to the first embodiment will be explained with reference to the block diagram of FIG. 1.

The program extraction apparatus 100 according to the embodiment includes a data acquirer 101, an area setting unit 102, a viewing amount calculator 103, and a program extractor 104.

The data acquirer 101 acquires a viewing history of a user and an area code indicating the location of the user. The viewing history is information on a program (channel) that the user is viewing. The information is acquired at suitable time intervals, such as at intervals of one second or one minute. A detailed example of the viewing history will be described later with reference to FIG. 2. The location of the user is a place where a television is located.

The area setting unit 102 receives the viewing history and the area code from the data acquirer 101, sets a range of a target area by using the area code, and generates at least one piece of target area information. For example, the range of target area is set by using a function g to gather locations of users u to a suitable granularity, and converting the locations to a target area T. The target area T may be set as an area designated by a first two digits of a postal code if the user's location is expressed by postal codes, and may be set by a telephone number area code if the user's location is expressed by a telephone number.

The viewing amount calculator 103 receives the viewing history and at least one piece of target area information from the area setting unit 102, and calculates a viewing amount for at least one program included in the viewing history of at least one user belonging to each target area to obtain a local area viewing amount. The viewing amount is a value indicating how much a program was watched, e.g., how many people watched the program, or how long the program was watched. The viewing amount calculator 103 calculates a total viewing amount throughout an entire nation for at least one program to obtain a nation-wide viewing amount. The viewing amount calculator 103 may receive the viewing history from the data acquirer 101.

The program extractor 104 receives the local area viewing amount and the nation-wide viewing amount from the viewing amount calculator 103, and extracts at least one program by referring to the local area viewing amount. Specifically, at least one program having a high viewer rating, i.e., a program having a large viewing amount, may be extracted by sorting the programs from the largest local area viewing amount, or at least one program having a low viewer rating, i.e., program having a low viewing amount, may be extracted by sorting the programs from the smallest local area viewing amount. The at least one extracted program is called a set of programs.

Next, an example of a user's viewing history will be described with reference to FIG. 2.

Table 200 in FIG. 2 stores user IDs 201, times 202, and program IDs 203, which are associated with each other as a viewing history. The user ID 201 is an identifier that identifies a user. The time 202 indicates information indicating the time when a user viewed a program (time information). The program ID 203 is an identifier that identifies a program.

For example, for the user ID 201 "u000124", time 202 "01/01/2013, 00:00:00", and program ID 203 "p000058" are associated.

In this example, the viewing history is obtained every one second. The viewing history can be used to realize the program that the user watched, and the time duration that the user watched the program based on an electronic program table having data in which a channel, time, and a program are associated with each other. The above processing may be performed by using a general technique, and an explanation thereof is omitted.

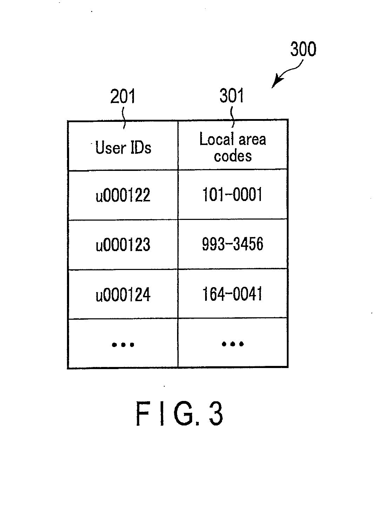

Next, an example of a user's area code will be described with reference to FIG. 3.

In table 300 in FIG. 3, the user IDs 201 and local area codes (area codes) 301 are associated with each other. The area code 301 is a value indicating a location of a user. For example, the user ID 201 "u000122", is associated with the area code 301 "101-0001".

For a digital television, a postal code input at the time of initial setting is stored in a digital television as the area code 301. Thus, the postal code transmitted to the data acquirer 101 may be used as the area code 301. For a CATV, address information received from a customer when making a contract is stored by a CATV company. Thus, the value transmitted to the data acquirer 101 may be used as the area code 301 at an appropriate timing. Information used as the area code 301 or as a way of transmitting the information may vary depending on the form of broadcast, as long as the data acquirer 101 can obtain the area code 301.

The area code may be a number determined by physical distribution companies such as a postal code, a number determined by an Internet provider, a telephone number, information specifying a user such as an address by the administrative district, or information setting a range centered on a landmark such as a station or a building, e.g., "five-minute walking distance from X station" and "within a radius of 500m from Y tower". If information setting a range centered on a landmark is used, the area code may be distance information or time information from the landmark.

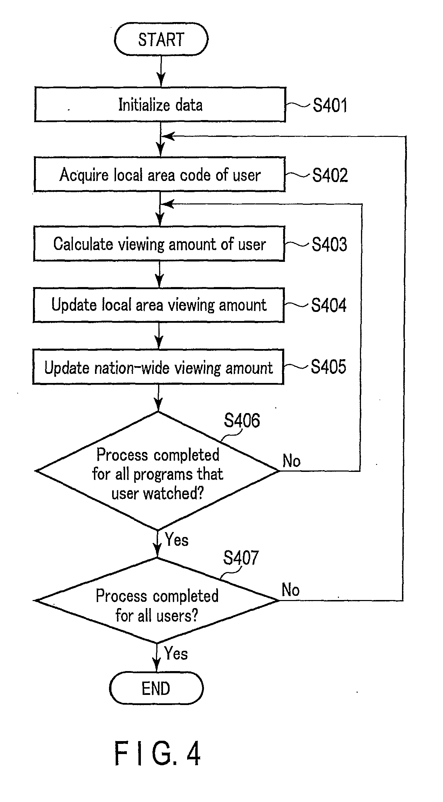

Next, a viewing amount computation process of the viewing amount calculator 103 will be described with reference to the flowchart of FIG. 4.

In step S401, the viewing amount calculator 103 initializes data. As a specific processing example, a two-dimensional sequence r [target area, program] that stores the viewing amount of each program for each area is initialized.

In step S402, the viewing amount calculator 103 acquires a target area T of a user from the area setting unit 102.

In step S403, the viewing amount calculator 103 calculates the viewing amount of the user of a program for which the viewing amount is to be calculated (target program). In this embodiment, the viewing time of a program calculated from time information shown in FIG. 2 is accumulated to calculate the total viewing time as the viewing amount. For example, one or more time durations from when the user started watching a program to when the user switched to another program are accumulated to obtain the viewing time. To exclude time for channel surfing, a threshold value may be set to determine whether or not the user watched a program for a predetermine period of time. The time less than the threshold value may be excluded from accumulation. The viewing amount may be obtained by calculating an average number of viewers based on the maximum number of viewers and the minimum number of viewers who watched a program in a particular time.

Specifically, the viewing amount v may be obtained by calculating the viewed time of a program p by using a function f. The function f is a function to convert the viewed time to units of seconds or minutes.

In step S404, the viewing amount calculator 103 updates the local area viewing amount for a target program. Specifically, the user's viewing amount is added to the local area viewing amount. Explaining by using the two-dimensional sequence r, the viewing amount v is added to r [a, p].

In step S405, the viewing amount calculator 103 updates the nation-wide viewing amount for a target program. Specifically, the user's viewing amount is added to the nation-wide viewing amount. Explaining by using the two-dimensional sequence r, the viewing amount v is added to r [nation, p].

In step S406, it is determined whether or not a process is completed for all of the programs that the user watched. If the process is completed for all the programs, step S407 is executed. If not, the process returns to step S403, and the same process is repeated.

In step S407, it is determined whether or not a process is completed for all users. If the process is completed for all users, the process is terminated. If not, the process returns to step S402, and the same process is repeated for a user for whom the process is not completed.

By the above processing, the local area viewing amount for the target area T is expressed by the total viewed time in which the viewed time of at least one user is added, and the nation-wide viewing amount is expressed by the total viewed time in which the viewed times of all the users are added. If the viewing amount is expressed by the number of users, the local area viewing amount for the target area T is expressed by the number of users who watched the program in the target area T, and the nation-wide viewing amount is expressed by the number of users nation-wide who watched the program.

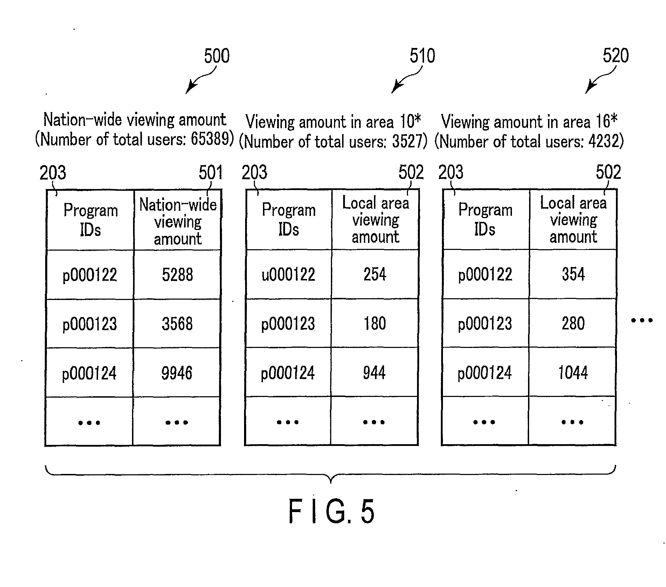

Next, an example of a viewing amount calculated by the viewing amount calculator 103 will be described with reference to FIG. 5.

Table 500 in FIG. 5 stores program IDs 203 and viewing amounts 501 which are associated with each other. Table 510 shows an example of the local area viewing amount for the area designated by the first two digits "10" of the postal code, and table 520 shows an example of the local area viewing amount for the area designated by the first two digit "16" of the postal code. Table 510 and table 520 each store program IDs 203 and viewing amounts 502 which are associated with each other.

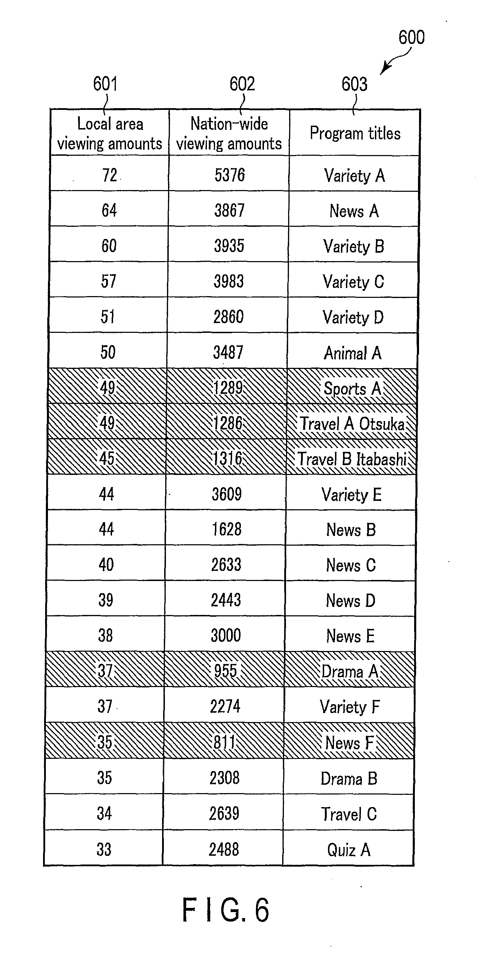

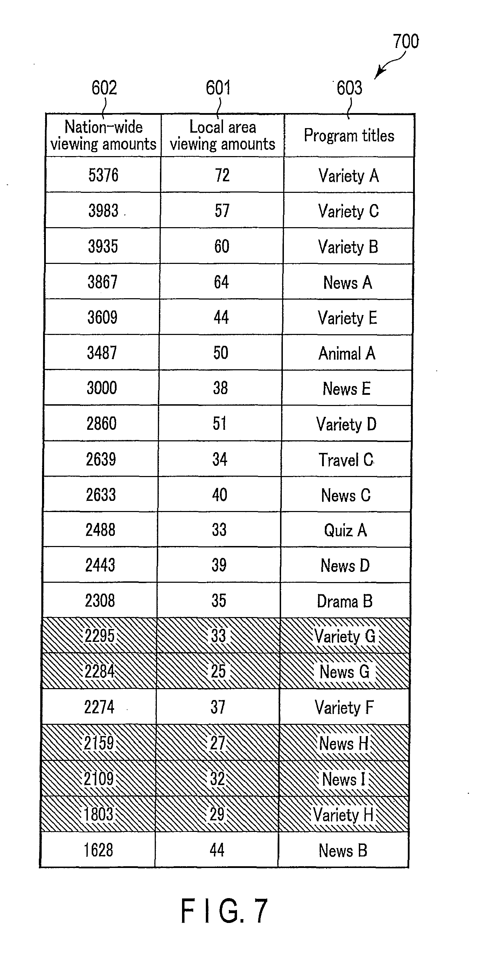

Next, an example of an extraction result obtained by the program extractor 104 will be described with reference to FIGS. 6 and 7.

Table 600 in FIG. 6 shows twenty highest-ranked programs, extracted based on the local area viewing amounts of programs in a certain area. The local area viewing amounts are sorted in descending order, and the twenty highest-ranked programs are extracted as a set of programs. Local area viewing amounts 601, nation-wide viewing amounts 602, and program titles 603 are associated with each other. Table 700 in FIG. 7 shows the twenty highest-ranked programs extracted based on the nation-wide viewing amounts of programs. The nation-wide view amounts are sorted in descending order, and the twenty highest-ranked programs are extracted as a set of programs. In the same manner as table 600, the nation-wide viewing amounts 602, local area viewing amounts 601, and program titles 603 are associated with each other. Based on table 600, programs with high viewer ratings can be extracted for each target area.

By comparing the local area viewing amount and the nation-wide viewing amount, the difference in programs with high viewer ratings or low viewer ratings between areas can be obtained. In FIGS. 6 and 7, programs in shaded columns only appear in the twenty highest-ranked programs based on the local area viewing amount or the nation-wide viewing amount. For example, programs "sports A", "travel A-Otsuka" and "travel B-Itabashi" appear only in the twenty highest-ranked programs for the target area, not in those based on the nation-wide viewing amount. "Otsuka" and "Itabashi" are area names in Tokyo.

According to the first embodiment, the range of the target area for viewer rating research is set by using the user's area code, and the local area viewing amount for the target area is extracted. This enables obtaining programs with high viewer ratings in the target area, and comparing programs with high viewer ratings between the target area and the entire nation. In addition, it is assumed that at least one digital television is owned in a single family; accordingly, data can be acquired with a fine granularity for each area. This enables obtaining high accuracy data for each target area, which is effective in applying to marketing or the like.

(Second Embodiment)

The second embodiment differs from the first embodiment in that a characterized program having a particular trend in an area is extracted based on the local area viewing amount.

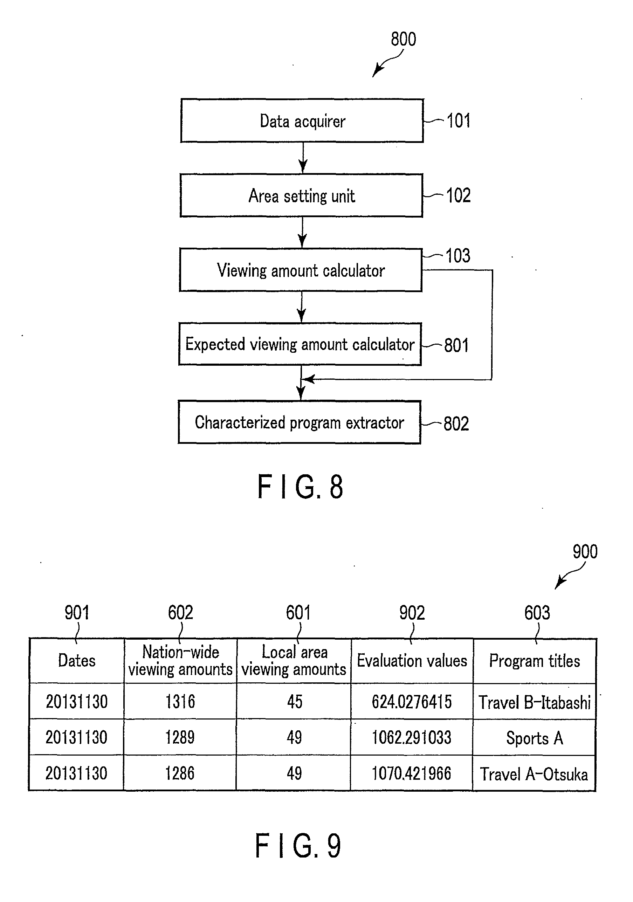

The program extraction apparatus according to the second embodiment will be explained with reference to FIG. 8.

The program extraction apparatus 800 according to the second embodiment includes the data acquirer 101, the area setting unit 102, the viewing amount calculator 103, an expected viewing amount calculator 801, and a characterized program extractor 802.

The data acquirer 101, the area setting unit 102, and the viewing amount calculator 103 perform the same operations as those in the first embodiment, and the explanations thereof will be omitted.

The expected viewing amount calculator 801 receives the local area viewing amount and the nation-wide viewing amount from the viewing amount calculator 103, and calculates an expected viewing amount. The expected viewing amount is a viewing amount in a target area that is assumed from the nation-wide viewing amount. In other words, the expected viewing amount is calculated by assuming that the viewing amount similar to the nation-wide viewing amount is obtained in the target area. The expected viewing amount is obtained by equation (1).

$$\overline{v}_T = v_{all}\frac{usize_T}{usize_{all}} \qquad (1)$$

$\overline{v}_T$ : expected viewing amount of target area T

$v_{all}$ : nation - wide viewing amount

$usize_T$ : number of users in target area T

$usize_{all}$ : number of users nation - wide

The characterized program extractor 802 receives the expected viewing amount and the local area viewing amount of the target area from the expected viewing amount calculator 801, calculates an evaluation value, and extracts a program having the evaluation value no less than a threshold value as a characterized program. The evaluation value indicates a deviation of the local area viewing amount from the expected viewing amount. In other words, it is a value to evaluate a program that is not particularly viewed in the target area, or is particularly viewed in the target area in comparison with the nation-wide viewing trend. The evaluation value is obtained by equation (2).

$$\chi^n = \frac{(v_T - \bar{v}_T)^n}{\bar{v}_T + 1} \qquad (2)$$

In equation (2), "+1" in the denominator at the right side is set to prevent a division error when the expected viewing amount is zero. Any other methods such as a conditional branch may be used as long as the same effect can be obtained.

In addition, "n" is an odd-number that is three or more, and can be set depending on the purpose of analysis. If the purpose of analysis is to extract a program that is remarkably popular or less popular in comparison with the nation-wide search, an absolute value of a threshold value or a value of n may be set at a large value.

Next, an example of an extraction result obtained by the characterized program extractor 802 will be described with reference to FIG. 9.

Table 900 in FIG. 9 shows the result of extracting characterized programs from table 600 in FIG. 6 by setting n to be "3", and setting the threshold value to be "500". Table 900 stores dates 901, the nation-wide viewing amounts 602, local area viewing amounts 601, evaluation values 902, and program titles 603 which are associated with each other.

The date 901 represents the date and time where a certain program is broadcast. The evaluation value 902 is an evaluation value of the certain program.

The difference from the nation-wide viewing trend is greater as the evaluation value becomes greater. For example, the program titles 603, "travel B-Itabashi" and "travel A-Otsuka", include a particular area name, and it is assumed that these programs are focused on particular target areas. Table 900 shows that such programs are viewed in the particular target area.

According to the second embodiment, characterized programs that exhibit a higher or lower viewer rating in comparison with the nation-wide viewing trend can be extracted by referring to the evaluation value calculated by using the expected viewing amount. This will assist marketing based on the users' viewing activities.

In the aforementioned embodiments, weighting may be applied based on the total viewing time of a particular user.

If the total viewing time of a particular channel in a day is equal to or greater than a threshold value, it is assumed that the user may leave on the television all the time, and may not intentionally watch a program. If the viewing amount is used for marketing research, it may be possible to weight the viewing amount of such a user to be lower when computing the viewing amount of a target area.

The flow charts of the embodiments illustrate methods and systems according to the embodiments. It is to be understood that the embodiments described herein can be implemented by hardware, circuit, software, firmware, middleware, microcode, or any combination thereof. It will be understood that each block of the flowchart illustrations, and combinations of blocks in the flowchart illustrations, can be implemented by computer program instructions. These computer program instructions may be loaded onto a computer or other programmable apparatus to produce a machine, such that the instructions which execute on the computer or other programmable apparatus create means for implementing the functions specified in the flowchart block or blocks. These computer program instructions may also be stored in a computer-readable memory that can direct a computer or other programmable apparatus to function in a particular manner, such that the instructions stored in the computer-readable memory produce an article of manufacture including instruction means which implement the function specified in the flowchart block or blocks. The computer program instructions may also be loaded onto a computer or other programmable apparatus to cause a series of operational steps to be performed on the computer or other programmable apparatus to produce a computer programmable apparatus which provides steps for implementing the functions specified in the flowchart block or blocks.

While certain embodiments have been described, these embodiments have been presented by way of example only, and are not intended to limit the scope of the inventions. Indeed, the novel methods and systems described herein may be embodied in a variety of other forms; furthermore, various omissions, substitutions, and changes in the form of the methods and systems described herein may be made without departing from the spirit of the inventions. The accompanying claims and their equivalents are intended to cover such forms or modifications as would fall within the scope and spirit of the inventions.

**Claims**

1. A program extraction apparatus **characterized by** comprising:

    an acquirer (101) which acquires a viewing history including information on at least one program viewed by each of users, and an area code indicating a location of the each of users;

a setting unit (102) which sets a range of a target area by using the area code;

a first calculator (103) which calculates, for each program included in the viewing history of at least one user belonging to the target area, a viewing amount indicating how much the program was viewed to obtain a local area viewing amount; and

an extractor (104) which extracts at least one program by referring to the local area viewing amount.

2. The apparatus according to claim 1, **characterized in that** the extractor (104) extracts, as a first set of programs, at least one program having a highest local area viewing amount or at least one program having a lowest local area viewing amount.

3. The apparatus according to claim 1, **characterized in that** the first calculator (103) calculates a viewing amount for each program included in viewing histories of all users to obtain a nation-wide viewing amount, and

the extractor (104) compares a second set of programs including a first number of programs having a highest local area viewing amount with a third set of programs including the first number of programs having a highest nation-wide viewing amount, and extracts at least one program included in either the second set of programs or the third set of programs.

4. The apparatus according to claim 3, **characterized in that** the viewing history includes time information indicating a time when the at least one user watched a program, and

the local area viewing amount is represented by a total viewing time of a program calculated based on the time information in the target area, and the nation-wide viewing amount is represented by a total viewing time of a program calculated based on the time information within a nation.

5. The apparatus according to claim 3, **characterized in that** the local area viewing amount is represented by the number of users that watched a program in the target area, and the nation-wide viewing amount is represented by the number of users that watched a program within a nation.

6. The apparatus according to claim 1, **characterized in that** the first calculator (101) calculates a viewing amount for each program included in viewing histories of all users to obtain a nation-wide viewing amount, and

the extractor (104) compares a fourth set of programs including a first number of programs having a lowest local area viewing amount with a fifth set of programs including the first number of programs having a lowest nation-wide viewing amount, and extracts at least one program included in either the fourth set of programs or the fifth set of programs.

7. The apparatus according to claim 1, **characterized in that** the area code is any one of a telephone number, a name of an administrative district, information on distance or time from a landmark, a number determined by an Internet provider, and a number determined by a physical distribution company.

8. A program extraction apparatus **characterized by** comprising:

an acquirer (101) which acquires a viewing history including information on at least one program viewed by each of users, and an area code indicating a location of the each of users;

a setting unit (102) which sets a range of a target area by using the area code;

a first calculator (103) which calculates, for each program included in the viewing history of at least one user belonging to the target area, a viewing amount indicating how much the program was viewed to obtain a local area viewing amount, and calculates a viewing amount for each program included in viewing histories of all users to obtain a nation-wide viewing amount;

a second calculator (801) which calculates the viewing amount in the target area expected from the nation-wide viewing amount for the each program as an expected viewing amount; and

an extractor (802) which calculates an evaluation value indicating a deviation of the local area viewing amount from the expected viewing amount for the each program, and extracts at least one characterized program having the evaluation value no less than a threshold value.

9. The apparatus according to claim 8, **characterized in that** the evaluation value is an Nth power of a value of difference between the local area viewing amount and the expected viewing amount for the target area, N being an odd number no less than three.

10. A program extraction method **characterized by** comprising:

acquiring a viewing history including information on at least one program viewed by each of users, and an area code indicating a location of the each of users;

setting a range of a target area by using the area code;

calculating, for each program included in the viewing history of at least one user belonging to the target area, a viewing amount indicating how much the program was viewed to obtain a local area viewing amount; and

extracting at least one program by referring to the local area viewing amount.

11. The method according to claim 10, **characterized in that** the extracting the at least one program extracts, as a first set of programs, at least one program having a highest local area viewing amount or at least one program having a lowest local area viewing amount.

12. The method according to claim 10, further comprising:

calculating a viewing amount for each program included in viewing histories of all users to obtain a nation-wide viewing amount;

comparing a second set of programs including a first number of programs having a highest local area viewing amount with a third set of programs including the first number of programs having a highest nation-wide viewing amount; and

extracting at least one program included in either the second set of programs or the third set of programs.

13. The method according to claim 12, **characterized in that** the viewing history includes time information indicating a time when the at least one user watched a program, and

the local area viewing amount is represented by a total viewing time of a program calculated based on the time information in the target area, and the nation-wide viewing amount is represented by a total viewing time of a program calculated based on the time information within a nation.

14. The method according to claim 12, **characterized in that** the local area viewing amount is represented by the number of users that watched a program in the target area, and the nation-wide viewing amount is represented by the number of users that watched a program within a nation.

15. The method according to claim 10, further comprising:

calculating a viewing amount for each program included in viewing histories of all users to obtain a nation-wide viewing amount;

comparing a fourth set of programs including a first number of programs having a lowest local area viewing amount with a fifth set of programs including the first number of programs having a lowest nation-wide viewing amount; and

extracting at least one program included in either the fourth set of programs or the fifth set of programs.

16. The method according to claim 10, **characterized in that** the area code is any one of a telephone number, a name of an administrative district, information on distance or time from a landmark, a number determined by an Internet provider, and a number determined by a physical distribution company.

17. A program extraction method **characterized by** comprising:

acquiring a viewing history including information on at least one program viewed by each of users, and an area code indicating a location of the each of users;

setting a range of a target area by using the area code;

calculating, for each program included in the viewing history of at least one user belonging to the target area, a viewing amount indicating how much the program was viewed to obtain a local area viewing amount;

calculating a viewing amount for each program included in viewing histories of all users to obtain a nation-wide viewing amount;

calculating the viewing amount in the target area expected from the nation-wide viewing amount for the each program as an expected viewing amount;

calculating an evaluation value indicating a deviation of the local area viewing amount from the expected viewing amount for the each program; and

extracting at least one characterized program having the evaluation value no less than a threshold value.

18. The method according to claim 17, **characterized in that** the evaluation value is an Nth power of a value of difference between the local area viewing amount and the expected viewing amount for the target area, N being an odd number no less than three.

19. A computer readable medium including computer executable instructions, wherein the instructions, when executed by a processor, cause the processor to perform a method **characterized by** comprising:

acquiring a viewing history including information on at least one program viewed by each of users, and an area code indicating a location of the each of users;

setting a range of a target area by using the area code;

calculating, for each program included in the viewing history of at least one user belonging to the target area, a viewing amount indicating how much the program was viewed to obtain a local area viewing amount.; and

extracting at least one program by referring to the local area viewing amount.

20. The medium according to claim 19, **characterized in that** the extracting the at least one program extracts, as a first set of programs, at least one program having a highest local area viewing amount or at least one program having a lowest local area viewing amount.

100

| Data acquirer | —101 |
| Area setting unit | —102 |
| Viewing amount calculator | —103 |
| Program extractor | —104 |

F I G. 1

200

| User IDs | Times | Program IDs |
|----------|-------|-------------|
| u000124 | 2013/01/01 00:00:00 | p000058 |
| u000124 | 2013/01/01 00:00:01 | p000058 |
| u000124 | 2013/01/01 00:00:02 | p030207 |
| ... | ... | ... |

201        202        203

F I G. 2

300

201          301

| User IDs | Local area codes |
|----------|------------------|
| u000122  | 101-0001         |
| u000123  | 993-3456         |
| u000124  | 164-0041         |
| ...      | ...              |

FIG. 3

START

Initialize data —S401

Acquire local area code of user —S402

Calculate viewing amount of user —S403

Update local area viewing amount —S404

Update nation-wide viewing amount —S405

S406

Process completed for all programs that user watched? — No

Yes

S407

Process completed for all users? — No

Yes

END

F I G. 4

500

510

520

Nation-wide viewing amount
(Number of total users: 65389)

Viewing amount in area 10*
(Number of total users: 3527)

Viewing amount in area 16*
(Number of total users: 4232)

203                    501   203                    502   203                    502

| Program IDs | Nation-wide viewing amount |
|---|---|
| p000122 | 5288 |
| p000123 | 3568 |
| p000124 | 9946 |
| ... | ... |

| Program IDs | Local area viewing amount |
|---|---|
| u000122 | 254 |
| p000123 | 180 |
| p000124 | 944 |
| ... | ... |

| Program IDs | Local area viewing amount |
|---|---|
| p000122 | 354 |
| p000123 | 280 |
| p000124 | 1044 |
| ... | ... |

• • •

F I G. 5

| Local area viewing amounts | Nation-wide viewing amounts | Program titles |
|---|---|---|
| 72 | 5376 | Variety A |
| 64 | 3867 | News A |
| 60 | 3935 | Variety B |
| 57 | 3983 | Variety C |
| 51 | 2860 | Variety D |
| 50 | 3487 | Animal A |
| 49 | 1289 | Sports A |
| 49 | 1286 | Travel A Otsuka |
| 45 | 1316 | Travel B Itabashi |
| 44 | 3609 | Variety E |
| 44 | 1628 | News B |
| 40 | 2633 | News C |
| 39 | 2443 | News D |
| 38 | 3000 | News E |
| 37 | 955 | Drama A |
| 37 | 2274 | Variety F |
| 35 | 811 | News F |
| 35 | 2308 | Drama B |
| 34 | 2639 | Travel C |
| 33 | 2488 | Quiz A |

601 602 603 600

F I G. 6

700

| Nation-wide viewing amounts | Local area viewing amounts | Program titles |
|---|---|---|
| 5376 | 72 | Variety A |
| 3983 | 57 | Variety C |
| 3935 | 60 | Variety B |
| 3867 | 64 | News A |
| 3609 | 44 | Variety E |
| 3487 | 50 | Animal A |
| 3000 | 38 | News E |
| 2860 | 51 | Variety D |
| 2639 | 34 | Travel C |
| 2633 | 40 | News C |
| 2488 | 33 | Quiz A |
| 2443 | 39 | News D |
| 2308 | 35 | Drama B |
| 2295 | 33 | Variety G |
| 2284 | 25 | News G |
| 2274 | 37 | Variety F |
| 2159 | 27 | News H |
| 2109 | 32 | News I |
| 1803 | 29 | Variety H |
| 1628 | 44 | News B |

602　　　601　　　603

# FIG. 7

800

```
┌─────────────────────────────┐
│      Data acquirer          │─── 101
└─────────────────────────────┘
              │
              ▼
┌─────────────────────────────┐
│      Area setting unit      │─── 102
└─────────────────────────────┘
              │
              ▼
┌─────────────────────────────┐
│  Viewing amount calculator  │─── 103
└─────────────────────────────┘
              │
              ▼
┌──────────────────────────────────┐
│ Expected viewing amount calculator│─── 801
└──────────────────────────────────┘
              │
              ▼
┌──────────────────────────────────┐
│  Characterized program extractor  │─── 802
└──────────────────────────────────┘
```

# FIG. 8

900

| Dates | Nation-wide viewing amounts | Local area viewing amounts | Evaluation values | Program titles |
|-------|------------------------------|-----------------------------|---------------------|-----------------|
| 20131130 | 1316 | 45 | 624.0276415 | Travel B-Itabashi |
| 20131130 | 1289 | 49 | 1062.291033 | Sports A |
| 20131130 | 1286 | 49 | 1070.421966 | Travel A-Otsuka |

901   602   601   902   603

# FIG. 9

Europäisches
Patentamt

European
Patent Office

Office européen
des brevets

## EUROPEAN SEARCH REPORT

Application Number

EP 15 18 4353

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is conventional. Its use for carrying out non-technical processes forms part of common general knowledge and it was widely available to everyone at the date of filing of the present application. No documentary evidence is therefore considered necessary. (See Official Journal EPO 11/2007, pages 592ff and 594ff)  ----- | | INV. G06Q30/02 |

TECHNICAL FIELDS
SEARCHED       (IPC)

G06Q

The present search report has been drawn up for all claims

| Place of search | Date of completion of the search | Examiner |
|---|---|---|
| The Hague | 18 December 2015 | Marcu, Antoniu |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)